Europäisches Patentamt

European Patent Office

Office européen des brevets

(19)

(11) EP 0 587 682 B2

(12) **NOUVEAU FASCICULE DE BREVET EUROPEEN**

(45) Date de publication et mention de la décision concernant l'opposition:
**14.01.1998 Bulletin 1998/03**

(45) Mention de la délivrance du brevet:
**12.04.1995 Bulletin 1995/15**

(21) Numéro de dépôt: **92911700.0**

(22) Date de dépôt: **10.06.1992**

(51) Int Cl.6: **D21H 15/10**, D21H 13/40, D21H 13/24

(86) Numéro de dépôt international:
**PCT/FR92/00521**

(87) Numéro de publication internationale:
**WO 92/22705 (23.12.1992 Gazette 1992/32)**

(54) **NOUVELLE FEUILLE OBTENUE PAR PROCEDE HUMIDE ET SON APPLICATION**

DURCH NASSVERFAHREN HERGESTELLTE BAHN UND IHRE VERWENDUNG

NOVEL SHEET PRODUCED BY A WET PROCESS AND APPLICATION THEREOF

(84) Etats contractants désignés:
**AT BE CH DE DK ES FR GB GR IT LI LU MC NL SE**

(30) Priorité: **12.06.1991 FR 9107158**

(43) Date de publication de la demande:
**23.03.1994 Bulletin 1994/12**

(73) Titulaire: **BERNARD DUMAS S.A.**
**F-24100 Bergerac (FR)**

(72) Inventeur: **BOURCHENIN, Pierre**
**F-24100 Bergerac (FR)**

(74) Mandataire: **Giraud, Françoise et al**
**Cabinet Beau de Loménie**
**158, rue de l'Université**
**75340 Paris Cedex 07 (FR)**

(56) Documents cités:

| | |
|---|---|
| WO-A-88/09710 | GB-A- 2 069 021 |
| GB-A- 2 078 769 | US-A- 4 205 122 |
| US-A- 4 265 985 | US-A- 4 465 748 |

Remarques:
Le dossier contient des informations techniques présentées postérieurement au dépôt de la demande et ne figurant pas dans le présent fascicule.

EP 0 587 682 B2

## Description

La présente invention concerne une nouvelle feuille obtenue par voie humide et son application notamment comme séparateur de batteries à recombinaison.

On connaît bien des cellules ou batteries électrolytiques portables compactes comprenant des plaques métalliques distantes les unes des autres et connectées en série. Un important facteur concernant le développement de telles batteries est l'utilisation de séparateurs poreux minces placés entre les plaques alternativement positives et négatives. La première fonction de ces séparateurs est d'empêcher la conduction métallique entre les plaques pour éviter des courts circuits. En même temps les séparateurs doivent permettre le libre passage de la solution électrolytique pour qu'il y ait un échange ionique entre les plaques.

On a fabriqué les séparateurs pour batteries commerciales à partir de bois, de caoutchouc microporeux, de feuilles en fibres cellulosiques ou de feuilles de polyoléfines fondues. De tels séparateurs de batteries sont décrits notamment dans les brevets US 2 793 398, 3 890 184, 4 024 323, 4 055 711, 4 113 927, 3 753 784, 3 694 265, 3 773 590, 3 351 495, 3 340 100, 3 055 966, 3 205 098 et 2 978 529.

Les batteries "sans entretien" se sont développées plus récemment et posent des problèmes particuliers pour la fabrication des séparateurs. Les batteries sans entretien sont des batteries scellées qui ne nécessitent pas l'addition d'eau pendant la durée de vie de la batterie. Pendant de nombreuses années, on a fabriqué des séparateurs à partir de feuilles cellulosiques imprégnées ou traitées avec des aldéhydes phénoliques. De tels séparateurs sont décrits plus particulièrement dans les brevets US 3 272 657 et 3 247 025. Cependant ces séparateurs ont l'inconvénient de permettre des pertes de gaz et on a renoncé à les utiliser pour des batteries scellées.

On a décrit dans les brevets US n° 4 359 511, 4 363 856, 4 529 677 et 4 618 401, déposés par la société TEXON des séparateurs pour batteries sans entretien qui sont constitués d'enveloppes scellées de façon étanche sur au moins trois côtés afin d'empêcher la formation de ponts avec des sels métalliques entre les électrodes. Ces séparateurs de batteries doivent posséder une porosité suffisante afin que l'échange ionique se produise, bien que les pores des séparateurs doivent être suffisamment petits pour empêcher une migration d'ions de métaux et donc la formation d'un pont court-circuitant la batterie. Ces séparateurs pour batteries au plomb et à l'acide doivent aussi être résistants aux actions chimiques acides étant donné l'environnement fortement acide présent à l'intérieur des batteries. Les brevets de TEXON décrivent de tels séparateurs qui peuvent être repliés et scellés à chaud le long de leurs bords. Ces séparateurs sont constitués de 5 à 20 % en poids de fibres de pulpe de polyoléfine, de 2 à 15 % en poids de fibres de polyester, de 0 à 20 % en poids de fibres de verre, de 40 à 75 % en poids de charges et de 7 à 20 % en poids de liants réticulables. Les fibres de polyester ont entre 0,7 et 2,1 cm de long. Ces séparateurs contiennent de nombreux constituants et sont scellables à chaud.

On a décrit dans le brevet US n° 4 216 281 des séparateurs de batteries qui peuvent être scellés soit par la chaleur, soit par ultrasons. Ces séparateurs sont constitués de 30 à 70 % en poids de pulpe de polyoléfine, de 15 à 65 % de charges siliceuse et de 1 à 35 % de fibres longues qui peuvent être du polyester. Ces fibres de polyester ont entre 0,7 et 2,6 cm de long. Lors de la préparation des feuilles sur machine à papier, on ajoute des agents ioniques.

Un inconvénient principal des séparateurs pour batteries sans entretien constitués en majorité de fibres de polyoléfines est que celles-ci ne permettent pas une recombinaison de l'oxygène et de l'hydrogène. Il est donc toujours nécessaire de rajouter de l'eau.

On connait par ailleurs des batteries à recombinaison qui sont décrites dans les brevets US 3 362 861 et 3 159 508. Ces batteries sont telles qu'elles permettent la recombinaison de l'oxygène et de l'hydrogène qui sont formés au cours de la réaction d'électrolyse.

On connaît des séparateurs pour batteries à recombinaison qui sont constitués de fibres de verre et de fibres de polypropylène.

On a décrit dans le brevet US n° 465 748 des séparateurs de batteries à recombinaison comprenant de 5 à 35 % en poids de fibres de verre ayant un diamètre inférieur à 1 micromètre. Le brevet décrit aussi une feuille de fibres de verre dont la longueur n'est pas supérieure à 5 mm.

Dans le brevet US 4 216 280 on a décrit des séparateurs de batteries à recombinaison qui sont constitués d'une feuille de fibres de verre comprenant de 50 à 95 % en poids de fibres de verre ayant un diamètre inférieur à 1 micromètre et de 50 à 5 % de fibres de verre ayant un diamètre supérieur à 5 micromètres et de préférence plus de 10 micromètres. De tels séparateurs résistent à l'électrolyte constitué par une solution d'acide sulfurique, ils emmagasinent la solution d'acide sulfurique en jouant le rôle d'une éponge, ce qui fait que l'on peut déplacer la batterie en tous sens. De plus, ils permettent la recombinaison de l'hydrogène et de l'oxygène, ce qui évite de rajouter de l'eau. Ces séparateurs de batteries ont l'inconvénient d'être chers et ils ne sont utilisés que pour des batteries pour l'industrie des télécommunications ou informatique. Cependant on souhaite fournir des séparateurs pour batteries qui soient moins chers et donc utilisables pour l'industrie automobile.

On a décrit dans le brevet US n° 4 373 015 une batterie à recombinaison qui comprend un séparateur constitué d'un mat de courtes fibres de polyester dont le diamètre est de 1 à 6 micromètres. Un tel mat de fibres a une épaisseur de 0,3 mm, une masse a mètre carré de 50 g/m², une porosité de 90 %. une absorption d'électrolyte de 100 à 200 %. Cependant. ce mat de fibres doit subir des traitements postérieurs. Notamment il doit subir un traitement de consolidation pour éviter le peluchage (treeing through). Ce traitement consiste à chauffer une face du mat pour faire fondre partiellement les fibres tout en ne détruisant pas la porosité de surface, mais en la réduisant seulement. On comprend qu'un tel traitement augmente le coût de fabrication du séparateur de batterie. De plus, il est délicat à réaliser. Pour réduire le peluchage du séparateur, notamment au voisinage des plaques positives de la batterie, on effectue un calandrage. Le mat de fibres doit aussi être traité avec des agents mouillants pour réduire la résistance électrique du séparateur. On traite le mat de fibres par exemple avec des alkylarylsulfonates ou des chlorures d'ammonium quaternaires.

Enfin dans la demande P.C.T. déposée par HOLLINGWORTH & VOSE n° WO 88/03710, on décrit un séparateur pour batteries à recombinaison constitué d'une feuille comprenant des premières fibres qui sont inertes à l'électrolyte aqueux et qui confèrent à la feuille une absorption de l'électrolyte supérieure à 90 % et des secondes fibres conférant à la feuille une absorption de l'électrolyte inférieure à 80 %. Les premières fibres sont des fibres de verre et les secondes fibres sont hydrophobes par rapport à l'électrolyte, par exemple ce sont des fibres de polyoléfine, à savoir polyéthylène ou polypropylène.

Un tel séparateur donne de bons résultats. Cependant, il ne permet pas d'effectuer des soudures haute fréquence.

L'invention vise à pallier les inconvénients mentionnés ci-dessus.

Un but de l'invention est de fournir une feuille pour séparateur de batteries qui puisse être soudé par haute fréquence ou par ultra-sons. Le soudage par haute fréquence ou ultra-sons est en effet désirable car il permet d'obtenir des soudures résistantes, alors que le soudage à chaud par molette est beaucoup plus fragile. Or, on souhaite obtenir pour augmenter la durée de vie des batteries, que les plaques de celle-ci soit placées dans des pochettes formées par soudage stable et résistant aux diverses contraintes mécaniques qu'elles pourraient subir lors de la fabrication de la batterie ou lors de son utilisation.

Un autre but de l'invention est de fournir une feuille pour séparateur de batteries qui ne nécessite pas, pour améliorer ses propriétés physiques et notamment sa cohésion interne, de traitements postérieurs.

Encore un autre but de l'invention est de fournir une feuille pour séparateur de batteries qui ne nécessite pas, pour améliorer sa résistance électrique, l'introduction de produits chimiques lors de la fabrication de cette feuille.

Un quatrième but de l'invention est de fournir une feuille qui soit compressible.

Un cinquième but de l'invention est de fournir une feuille pour séparateur ayant une absorption d'acide sulfurique très élevée.

A cet effet, l'invention concerne un séparateur de batterie à recombinaison comprenant une feuille réalisée par voie humide qui est constituée d'un mélange de fibres de verre et de fibres synthétiques, les fibres synthétiques amenant d'une part la formation d'un réseau tridimensionnel lors de la formation de la feuille et d'autre part la soudabilité de la feuille.

Les fibres synthétiques sont des fibres composites constituées d'une première matière synthétique qui se ramollisse lors de la fabrication de la feuille et d'une deuxième matière synthétique qui se ramollisse lors du soudage de la feuille.

Plus préférentiellement, la première matière synthétique a un point de ramollissement compris entre 100 et 140 °C et la seconde matière synthétique a un point de ramollissement supérieur à 150 °C.

Selon un mode de réalisation préféré de l'invention, la deuxième matière synthétique est un polyester régulier, plus particulièrement un polyéthylène téréphtalate, et la première matière synthétique est un copolyester à structure non cristalline.

De préférence, les fibres synthétiques comportent une gaine constituée de la première matière synthétique et d'un coeur constitué de la seconde matière synthétique.

Les fibres synthétiques peuvent être des microfibres de longueur aléatoire et peuvent avoir un diamètre inférieur à 16 micromètres.

La feuille selon l'invention est telle qu'elle est constituée de 10 à 90 % de fibres de verre et de 90 à 10 % de fibres synthétiques.

Selon un mode de réalisation de l'invention, les fibres de verre sont constituées d'un mélange de fibres de diamètre inférieur à 3,5 micromètres et de fils coupés de longueur comprise entre 6 et 8 mm environ.

La description suivante, en regard des exemples non limitatifs suivants, permettra de comprendre comment l'invention peut être mise en pratique.

## EXEMPLE 1

On met en suspension dans l'eau, comprenant de l'acide sulfurique pour obtenir un pH de 3 environ, le mélange suivant de fibres:

25 % de fibres synthétiques comportant un coeur en co-polyester et une gaine en polyester fabriquées par la société japonaise KURARAY et vendues sous le nom SOFIT N 720,

65 % de fibres de verre constituées de 20 parties de fibres 206 et de 80 parties de fibres 210X.

10 % de fibres de verre de longueur comprise entre 6 et 8 mm.

Les fibres 206 et 210X sont des marques de la société MANVILLE. Elles sont constituées d'un verre borosilicate résistant aux acides.

La suspension aqueuse ainsi obtenue est diluée et introduite en caisse de tête d'une machine à papier pour obtenir une feuille.

La feuille obtenue est tridimentionnelle, c'est-à-dire que les fibres de polyester en leur gaine qui a fondu sous l'action de la chaleur lors du passage de la feuille en sécherie ont formé des liaisons interfibres. La feuille a un bouffant, c'est-à-dire qu'elle a une épaisseur importante et que l'on peut facilement la comprimer. La feuille a une bonne stabilité dimentionnelle et une bonne tenue mécanique. De plus, sa cohésion interne est élevée du fait de la fusion superficielle des fibres synthétiques.

Les caractéristiques de la feuille ont les valeurs nominales suivantes:

| -masse au mètre carré: | | 167 |
|---|---|---|
| -épaisseur en mm: (sous une pression 10,3 kPa) | | 1,0 |
| -densité: | | 0,167 |
| -Résistance à la rupture (selon la norme NFQ03-004) | *sens machine en daN/24,5mm | 3,33 |
| | *sens travers en daN/24,5mm | 2,20 |
| -Allongement à la rupture (selon la norme NFQ03-004) | *sens machine en % | 3,22 |
| | *sens travers en % | 4,51 |
| -Ascension capillaire (selon la norme NFQ03-001) dans l'acide sulfurique d = 1,27 à 20°C sens machine, en 2 minutes, en mm | | 68 |
| -Absorption d'acide sulfurique (d =1,27) à 20 °C, en % | | 1000 |
| -Volume porométrique en % | | 93,37 |
| -Diamètres des pores (selon la norme ASTM F 316-86) en microns | *Mini | 4,04 |
| | *Maxi | 22,95 |
| | *MFP | 7,12 |
| -Résistance électrique (acide sulfurique, d = 1,280 à 26,7 °C) en ohm.cm$^2$ | | 0,038 |

L'absoption d'acide sulfurique est mesurée de la manière suivante:

On prend deux éprouvettes circulaires de 8 cm de diamètre et on les pèse. On plonge une éprouvette verticalement dans un bac approprié contenant un litre d'acide sulfurique à 1,27 de densité à 20°C. Après quelques secondes, on sort l'éprouvette pour permettre le dégagement des bulles. Puis on replonge l'éprouvette verticalement dans le bac pendant une minute. On retire l'éprouvette en ayant soin de la laisser égoutter au-dessus du bain. L'égouttage dure 45 secondes. On enlève la gouttelette formée à la partie inférieure de l'éprouvette au moyen d'une tige de verre et on pèse à nouveau.

Le pouvoir absorbant est exprimé en % et est calculé suivant l'expression: ( Masse après imprégnation : Masse avant imprégnation) X 100.

La résistance électrique est mesurée de la manière suivante:

Le matériel utilisé est le suivant:

- Bac en "Altuglas" comportant 4 électrodes

    2 en plomb
    2 en cadmium
    1 logement pour glisser les séparateurs ( surface de passage du courant 2,56 cm$^2$ environ, soit 10 inch$^2$).

- Générateur en courant continu de 10 ampères.
- Millivoltmètre numérique.

- Matériel de régulation de température.
- Acide sulfurique de densité 1,28 à 26,7 °C.

On découpe une éprouvette de 140 mm de large x 160 mm de haut. On règle l'intensité du courant à 10 ampères entre les deux électrodes au plomb. On note la tension à vide Uo entre les électrodes cadmium. On glisse lentement l'éprouvette dans le logement. On note la tension U1. On fait des mesures sur trois séparateurs et on en fait la moyenne. Les résultats sont donnés en ohm.cm$^2$

$$[(U1 - Uo) : 10 \, A] \times 63{,}6 = \text{Résistance en ohm.cm}^2.$$

On découpe la feuille en un rectangle, on la plie en deux et on la soude par haute fréquence ou par ultra-sons sur les deux côtés latéraux, afin de former une pochette dans laquelle on introduit une plaque avant ou après la soudure. La soudure est stable.

## EXEMPLE 2

On fabrique une feuille selon l'exemple 1, mais on utilise 40 parts de fibres de verre 206 et 60 parts de fibres de verre 210X.

On obtient une feuille dont les caractéristiques physiques ont les valeurs nominales suivantes:

| -masse au mètre carré: | | 167 |
|---|---|---|
| -épaisseur en mm: (pression 10,3 kPa) | | 1,0 |
| -densité: | | 0,167 |
| -Résistance à la rupture (selon la norme NFQ03-004) | *sens machine en daN/24,5mm | 3,8 |
| | *sens travers en daN/24,5mm | 3,0 |
| -Allongement à la rupture (selon la norme NFQ03-004) | *sens machine en % | 3,5 |
| | *sens travers en % | 5,00 |
| -Ascension capillaire (selon la norme NFQ03-001) dans l'acide sulfurique d = 1,.27 à 20°C sens machine, en 2 minutes, en mm | | 66 |
| -Absorption d'acide sulfurique (d =1,27) à 20 °C, en % | | 1200 |
| -Volume porométrique en % | | 93,37 |
| -Diamètres des pores (selon la norme ASTM F 316-86) en microns | *Mini | 4,00 |
| | *Maxi | 15,50 |
| | *MFP | 6,00 |
| -Résistance électrique (acide sulfurique, d = 1,280 à 26,7 °C) en ohm.cm$^2$ | | 0,038 |

De même on découpe un rectangle, on le plie et on soude les deux côtés latéraux par haute fréquence. La soudure est stable.

**Revendications**

1. Séparateur de batterie à recombinaison, caractérisé par le fait qu'il comprend une feuille réalisée par voie humide constituée d'un mélange de fibres de verre et de fibres synthétiques, lesdites fibres synthétiques amenant d'une part la formation d'un réseau tridimensionnel lors de la formation de la feuille et d'autre part la soudabilité de la feuille, lesdites fibres synthétiques étant constituées de fibres composites constituées d'une première matière synthétique qui se ramollit lors de la fabrication de la feuille et d'une deuxième matière synthétique qui fond lors du soudage de la feuille.

2. Séparateur selon la revendication 1, caractérisé par le fait que les fibres synthétiques comportent une gaine constituée de la première matière synthétique et un coeur constitué de la seconde matière synthétique.

3. Séparateur selon l'une des revendications 1 ou 2, caractérisé par le fait que la première matière synthétique a un point de ramollissement compris entre 100 et 140°C et la seconde matière synthétique a un point de ramollissement supérieur à 150°C.

4. Séparateur selon l'une des revendications 1 ou 3, caractérisé en ce que ladite première matière synthétique est un copolyester à structure non cristalline et la deuxième matière synthétique est un polyester régulier.

5. Séparateur selon l'une des revendications 1 à 4, caractérisé par le fait que le polyester est un polyéthylène téréphtalate.

6. Séparateur selon l'une des revendications 1 à 5, caractérisé par le fait que les fibres synthétiques sont des microfibres de diamètre inférieur à 16 micromètres.

7. Séparateur selon l'une des revendications 1 à 6, caractérisé par le fait que ladite feuille est constituée de 10 à 90 % de fibres de verre et de 90 à 10 % de fibres synthétiques.

8. Séparateur selon l'une des revendications 1 à 7, caractérisé par le fait que les fibres de verre sont constituées d'un mélange de fibres de diamètre inférieur à 3,5 micromètres et de fils coupés de longueur comprise entre 6 et 8 mm environ.

## Patentansprüche

1. Separator von Rekombinations-Batterien, dadurch gekennzeichnet, daß er eine (ein) nach dem Naßverfahren hergestellte(s) Folie (Blatt) enthält, die (das) besteht aus einem Gemisch von Glasfasern und Synthesefasern, wobei die genannten Synthesefasern einerseits bei der Herstellung der Folie (des Blattes) die Bildung eines dreidimensionalen Netzes (Gitters) und andererseits die Verschweißbarkeit der Folie (des Blattes) mit sich bringen und wobei die genannten Synthesefasern aus Verbundfasern (zusammengesetzten Fasern) bestehen, die aus einem ersten synthetischen Material, das bei der Herstellung der Folie (des Blattes) weich wird, und einem zweiten synthetischen Material, das beim Verschweißen der Folie (des Blattes) schmilzt, bestehen.

2. Separator nach Anspruch 1, dadurch gekennzeichnet, daß die Synthesefasern eine Hülle aus dem ersten synthetischen Material und einen Kern aus dem zweiten synthetischen Material aufweisen.

3. Separator nach einem der Ansprüche 1 oder 2, dadurch gekennzeichnet, daß das erste synthetische Material einen Erweichungspunkt zwischen 100 und 140°C hat und das zweite synthetische Material einen Erweichungspunkt von über 150°C hat.

4. Separator nach einem der Ansprüche 1 oder 3, dadurch gekennzeichnet, daß das erste synthetische Material ein Copolyester mit nichtkristalliner Struktur und das zweite synthetische Material ein regulärer Polyester ist.

5. Separator nach einem der Ansprüche 1 bis 4, dadurch gekennzeichnet, daß der reguläre Polyester ein Polyethylenterephthalat ist.

6. Separator nach einem der Ansprüche 1 bis 5, dadurch gekennzeichnet, daß die Synthesefasern Mikrofasern mit einem Durchmesser von kleiner als 16 μm sind.

7. Separator nach einem der Ansprüche 1 bis 6, dadurch gekennzeichnet, daß die Folie (das Blatt) zu 10 bis 90% aus Glasfasern und zu 90 bis 10% aus Synthesefasern besteht.

8. Separator nach einem der Ansprüche 1 bis 7, dadurch gekennzeichnet, daß die Glasfasern aus einem Gemisch von Fasern mit einem Durchmesser von kleiner als 3,5 μm und Stapelfasern mit einer Länge zwischen etwa 6 und 8 mm bestehen.

## Claims

1. Recombination battery separator characterized by the fact that it comprises a sheet produced by a wet process constituted by a blend of glass fibers and of synthetic fibers, said synthetic fibers producing, on the one hand, the formation of a three-dimensional network during the formation of the sheet and ensuring, on the other hand, weldability of the sheet, said synthetic fibers being constituted of composite fibers constituted by a first synthetic material which softens during manufacture of the sheet and by a second synthetic material which melts during welding of the sheet.

2.  Separator according to claim 1, characterized by the fact that the synthetic fibers comprise an envelope constituted by the first synthetic material and a core constituted by the second synthetic material.

3.  Separator according to one of claims 1 or 2, characterized by the fact that the first synthetic material has a softening point included between 100 and 140°C and the second synthetic material has a softening point higher than 150°C.

4.  Separator according to one of claims 1 or 3, characterized in that the first synthetic material is a co-polyester of non-crystalline structure and the second synthetic material is a regular polyester.

5.  Separator according to one of claims 1 to 4, characterized by the fact that the polyester is a polyethylene terephthalate.

6.  Separator according to one of claims 1 to 5, characterized by the fact that the synthetic fibers are microfibers of diameter less than 16 micrometers.

7.  Separator according to one of claims 1 to 6, characterized by the fact that said sheet is constituted by 10 to 90% of glass fibers and 90 to 10% of synthetic fibers.

8.  Separator according to one of claims 1 to 7, characterized by the fact that the glass fibers are constituted by a blend of fibers of diameter less than 3.5 micrometers and of cut filaments of length comprised between about 6 and 8 mm.